# EUROPEAN PATENT APPLICATION

(11) **EP 2 804 152 A1**
(43) Date of publication of application: **19.11.2014**
(21) Application number: 14168503.2
(22) Date of filing: 15.05.2014
(51) Int. Cl.: G07C 5/08, H04N 7/18, B60R 1/00, G08B 13/196, G06T 15/20, G07C 5/00

(54) **Event detection and recording methods and systems**

(30) Priority: 15.05.2013 GB 201308740
(71) Applicant: Nissan Motor Manufacturing (UK) Ltd., Cranfield Bedfordshire MK43 0DB (GB)
(72) Inventor: Diaz Illan, Pedro, Barcelona 08040 (ES)

(57) **Abstract**

Event detection and recording methods and systems 10 for vehicles are disclosed. The methods and systems comprise continuously storing event data to a memory 16, overwriting the oldest event data when the memory 16 is full, detecting the occurrence of an event concerning the vehicle and write-protecting portions of the memory containing event data stored over a predetermined period during which the detected event occurred. The event data comprises a plurality of video image sets generated by a respective plurality of video cameras 24. The plurality of video cameras 24 are positioned and arranged relative to one another to simultaneously view and generate the video images which are of respective portions of a peripheral area substantially surrounding the vehicle.

## Description

### Background

This invention relates to event detection and recording methods and systems for vehicles.

Many vehicles are fitted with event data recorders. These are used to record data related to the vehicle such as velocity, steering angle, engine parameters and use of vehicle brakes. This data may be used by police or for insurance purposes if an incident such as a collision occurs.

Some event data recorders continuously record data, overwriting previously recorded data to reduce memory requirements. If a collision is detected, then these data recorders record for a predetermined length of time and do not overwrite the recorded data of interest. Other event data recorders may be activated by crash precursors, such as a sudden change in velocity indicative of a driver carrying out an emergency stop, and may continue to record until the memory is full. Typically, the memory used for event data recorders to store data is a rewritable non-volatile memory.

Event data recorders can also record video data from one or more cameras on the vehicle. Document US 7180407 describes a vehicle video event data recorder that can record engine performance data along with video data from a plurality of cameras. This document describes a system for continuously recording data and overwriting previously recorded data until a collision sensor is activated to stop the recording after a predetermined length of time thereby preventing data being overwritten. Further, the system discussed in this document is limited to detecting a vehicle collision using a collision sensor and does not specify the use of the event data recorder in other scenarios. It may be desirable to utilise an event data recorder to record incidents other than collisions.

Furthermore, whilst US 7180407 describes the use of a plurality of cameras for recording video footage of a collision, there is no specific disclosure about how these cameras can be positioned and configured to provide footage that is comprehensive, convenient and intuitive for a user to review following the occurrence of an event.

It is against this background that the present invention has been conceived.

### Summary of the Invention

According to a first aspect of the present invention there is provided an event detection and recording system for a vehicle. Ideally, the event detection and recording system comprises at least one of:
a plurality of video cameras, each video camera generating a respective set of video images; a memory arranged to store each set of video images;
an event detection module arranged to detect the occurrence of an event concerning the vehicle, and in response, issue an event detection signal; and
a controller, operatively connected to the plurality of video cameras, the memory and the event detection module;
the controller having a ready state in which it is configured to:
   continuously receive event data, the event data comprising each set of video images from the video cameras, and that store that event data to the memory, overwriting the oldest event data when the memory is full; and
   receive the event detection signal from the event detection module and, in response, write-protect portions of the memory containing event data stored over a predetermined period during which the detected event occurred;
   wherein the plurality of video cameras are each positioned and arranged relative to one another to simultaneously view and generate video images of respective portions of a peripheral area substantially surrounding the vehicle.

In a preferred embodiment, the video cameras of the system have overlapping fields of view such that regions of the peripheral area substantially surrounding the vehicle can be seen in more than one video image at the same time.

Preferably, the peripheral area completely surrounds the vehicle. This would mean that the 360 degree area surrounding the vehicle (when viewed from above) would comprise the peripheral area. The benefit of this would be to provide a view from all angles around the vehicle and prevent blind spots; i.e. areas around the vehicle that are not in view of the cameras.

Ideally, at least one of the plurality of video cameras may comprise ultra wide angle lenses with a field of view of 180 degrees. Using ultra wide angle lenses would allow each video camera to be able to cover a larger portion of the peripheral area surrounding the vehicle and would therefore reduce the total number of cameras required to ensure that the peripheral area completely surrounds the vehicle.

Additionally, the controller may be configured to carry out a composite image generation process in which video images of respective portions of the peripheral area contemporaneously generated by respective video cameras are combined to form a composite image of the peripheral area. A benefit of combining the video images to form a composite image is to reduce optical distortion in the video images caused by the use of wide angle lenses on the plurality of video cameras. Further, the composite image can be used to present the video images to the user in a more intuitive form and would be beneficial in shedding light on the events leading up to an incident, for example, if another vehicle was driving dangerously causing a collision.

The composite image may be a virtual image of the peripheral area around the vehicle as viewed from a virtual viewpoint located above the vehicle. Further, the composite image generation process may comprise an image registration process in which the video images that are combined to form the composite image are first manipulated by a predetermined coordinate transformation.

Ideally, the predetermined coordinate transformation manipulates the video images so that when they are combined to form the composite image, they align in a manner that maintains the visual continuity of the peripheral area.

Preferably, the video cameras of the system are mounted at predetermined positions on the vehicle. An event detection and recording system may utilise four video cameras. In this embodiment, the first video camera would be mounted at the front (e.g. on the radiator grill or front bumper), the second and third video cameras would be mounted on the left and right sides of the vehicle respectively (e.g. on the left and right wing mirrors or vehicle pillars) and the fourth video camera would be mounted at the rear of the vehicle (e.g. on the rear bumper or rear number plate recess).

In a preferred embodiment, the event detection module of the system is operatively connected to an anti-theft system and is arranged to issue the event detection signal in response to receiving from the anti-theft system a theft alert signal.

The event detection module of the system may be operatively connected to a collision detection system and may be arranged to issue the event detection signal in response to receiving from the collision detection system a collision alert signal.

Preferably, the event detection module is operatively connected to at least one event data source and is arranged to issue the event detection signal in response to receiving from the at least one event data source event data having one or more predetermined values.

Ideally, the controller is operatively connected to at least one event data source from which the controller is arranged to receive event data to be stored to the memory.

In a preferred embodiment, the event data source comprises at least one of an engine management system of the vehicle and an on-vehicle data bus.

Optionally, the event data that is recorded to the memory alongside the video image sets further comprises at least one of: longitude, latitude, vehicle speed, route, direction, road speed limit, traffic information, engine speed, engine temperature, proximity to one or more obstacles, selected gear, door position and steering angle.

Preferably, the portion of write-protected memory corresponding to the length of the predetermined period is controlled in response to the type of detected event. This would enable the memory to be effectively utilised. For example, if a collision was detected by the event detection module, a longer period of time would be recorded and retained around the event than if a person was detected walking past the vehicle.

In a preferred embodiment, the system comprises an electronic screen operatively connected to the controller, the controller being arranged to format event data and transmit it to the electronic screen for display.

Optionally, the controller has a playback configuration in which it is configured to retrieve event data from the memory for playback on the electronic screen. The electronic screen may be vehicle-mounted.

The event detection and recording system may comprise a user interface operatively connected to the controller, the user interface being arranged to receive one or more user commands for use in controlling the behaviour of the controller.

In embodiments with a user interface, on receipt of the one or more user commands, the controller may be arranged to carry out at least one of: selecting a portion of the memory containing event data; controlling video playback of event data stored in the memory; changing a write-protected state of a portion of the memory; and transmitting event data from the memory to a remote device.

The event detection and recording system may further comprise a communications system operatively connected to the controller, the communication system being arranged to communicate with a remote device. The communication system may be operatively connected to the Internet for example by using a mobile broadband modem, Bluetooth or Wi-Fi.

In embodiments with a communications system, the controller and the communication system may be together arranged to transmit an alert to the remote device in response to the issuance of the event detection signal from the event detection module.

In embodiments with a communications system, the controller and the communication device may be together arranged to receive a data request from the remote device and, in response, transmit real-time event data and/or event data stored in the memory to the remote device.

The event detection and recording system may be powered by a battery and further comprise a battery charge detector arranged to determine the state of charge of the battery and in response control the behaviour of the system. Advantageously, this would allow the system to remain operational whilst the vehicle was not providing power to the system. In other words, the battery could power the system when the vehicle is stationary with the engine off, for example to record third party damage caused to the vehicle in a public car park.

In embodiments comprising a battery, the system is preferably configured to switch to a low-power state in response to the battery charge detector detecting that the battery has a charge below a predetermined threshold.

According to a second aspect of the present invention there is provided a vehicle comprising an event detection and recording system according to the first aspect of the invention.

According to a third aspect of the present invention there is provided a method of detecting and recording events concerning a vehicle comprising the steps of:
continuously storing event data to a memory;
overwriting the oldest event data when the memory is full;
detecting the occurrence of an event concerning the vehicle; and
write-protecting portions of the memory containing event data stored over a predetermined period during which the detected event occurred;
wherein:
   the event data comprises a plurality of video image sets generated by a respective plurality of video cameras, the plurality of video cameras each being positioned and arranged relative to one another to simultaneously view and generate said video images which are of respective portions of a peripheral area substantially surrounding the vehicle.

It will be understood that features and advantages of the various aspects of the present invention may be combined or substituted where context allows.

### Brief Description of the Drawings

In order that the invention may be more readily understood, embodiments of the invention will now be described in more detail, by way of example only, and with reference to the following figures in which:
Figure 1 is a block diagram of an event detection and recording system according to an embodiment of the present invention;
Figure 2 is a flowchart of the operation of the event detection and recording system of Figure 1 whilst a vehicle engine is running;
Figure 3 is a flowchart of the operation of the event detection and recording system of Figure 1 whilst the vehicle engine is off; and
Figure 4 is a schematic diagram showing how a simulated overhead view of a vehicle is generated by the event detection and recording system of Figure 1.

### Detailed Description of the Preferred Embodiments

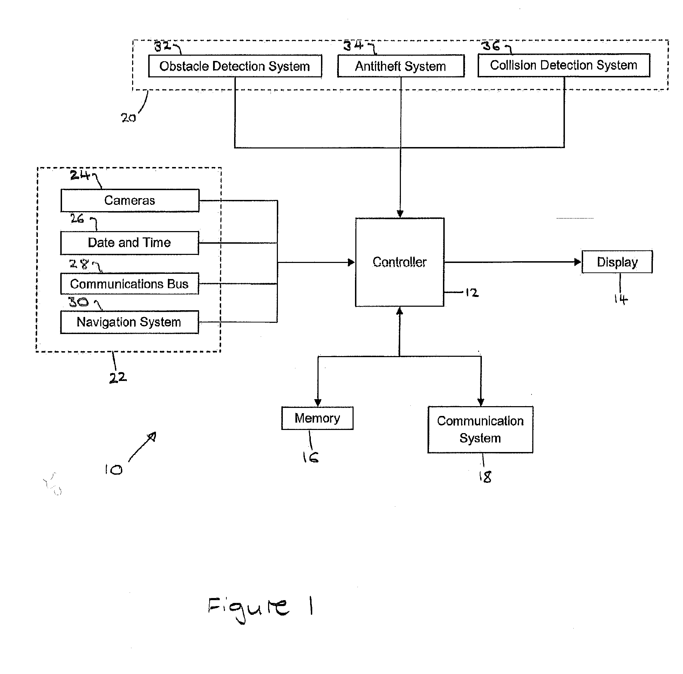

Figure 1 shows a an event detection and recording system 10 for a vehicle having a controller 12, an electronic display screen 14, a memory 16, a communication system 18, event data sources 20 in the form of recordable inputs systems and incident detection systems 22. The controller 12 is connected to the memory 16 and the communication system 18 with input/output communication lines. The memory 16 comprises a rewritable non-volatile memory 16 such as flash memory 16 and is contained in a housing that is physically shielded against the potential effect of incidents such as impact or fire. The shielding protects the memory 16 such that it is retrievable following an incident. The communication system 18 is configured to connect to the Internet, for example by using a mobile broadband modem. The controller 12 is also connected to the electronic display screen 14 for visual output of information. In this embodiment, the electronic display screen 14 is located in the centre console of the vehicle but it could, in alternatives, be located elsewhere in the vehicle.

The controller 12 records data from the recordable input systems to the memory 16. The different sets of data are beneficial in analysing the behaviour of the vehicle and its surroundings leading up to an event. The recordable input systems 22 comprise a plurality of video cameras 24, a date and time system 26, a communications bus 28 and a navigation system 30.

The plurality of video cameras 24 are each arranged to generate a respective set of video images. Each video camera comprises an ultra-wide angle lens with viewing angles of around 180 degrees. The plurality of video cameras 24 are positioned and arranged relative to one another around the vehicle - in particular, the front, rear and side of the vehicle - to view and generate respective sets of video images of the entire area around the vehicle. Moreover, the video cameras 24 have overlapping fields of view and the field of view is sufficient to simulate an overhead view of the vehicle as will be discussed in more detail below. The date and time system 26 provides date and time information used to synchronise data from the other recordable input systems 22. The navigation system 30 provides information such as GPS location data, vehicle speed, route, direction, road speed limit and traffic information. Other data may also be sourced from data sources typically found on modern vehicles - for example the engine management system. Such data may be carried by the communication bus 28.

The communication bus 28 is an on-vehicle internal communications network that interconnects vehicle components using standardised protocols. For example the communication bus may comprise "Controller Area Network" or "Local Interconnect Network" systems and/or protocols may be used as are known in the art. The controller 12 is configured to read information from the communications bus 28, this information typically includes engine RPM, engine temperature, vehicle speed, braking system settings, direction of steering, windscreen wiper settings, external lighting settings (for example headlamps and indicators) and vehicle warning indications.

The event detection and recording system 10 also comprise an event detection module (not shown). In the present embodiment, this is part of the controller 12, but it will be appreciated that in other embodiments, the event detection module may be a separate component. The event detection module is arranged to detect the occurrence of an event concerning the vehicle. One way it can do this is by receiving information from the incident detection systems 22. The incident detection systems 22 comprise an obstacle detection system 32, an antitheft system 34 and a collision detection system 36. In this embodiment the antitheft system 34 comprises motion detectors (such as ultrasonic sensors, passive infrared sensors, microwave sensors or any combination of these) to detect movement inside the vehicle. The collision detection system 36 utilises accelerometers such as micro-electromechanical system accelerometers or mechanical impact sensors to detect any collisions. The obstacle detection system 32 comprises ultrasonic proximity detectors or electromagnetic proximity sensors mounted externally to the vehicle to detect objects near the vehicle. These incident detection systems 22 are used to transmit a signal to the event detection module indicating the occurrence and type of incident. For example, the obstacle detection system 32 transmits an obstacle alert signal if the obstacle detection system 32 detects an object within a predetermined proximity to the vehicle. Also, the anti-theft system transmits a theft alert signal if the anti-theft system is in an armed state, and a person is detected to be inside the vehicle, or the vehicle is detected to be moving. Similarly, the collision detection system 36 transmits a collision alert signal if the acceleration measured by the collision detection system 36 is greater than a predetermined threshold. These signals flag to the event detection module that an event has occurred, and the event detection module, in turn issues an event detection signal to the controller 12.

It will be understood that there are other ways in which the event detection module is able to detect the occurrence of an event. For example, the event detection module may be operatively connected, via the controller 12, to other event data sources - for example data on the communication bus 28.

The event detection module processes such data from these data sources to detect whether an incident has occurred. In particular, the event data may have a range of values, and the event detection module is arranged to monitor these values so as to determine if or when to issue an event detection signal. For example, there may be predetermined thresholds for each of the event data parameters. If a predetermined threshold or combination of predetermined thresholds are exceeded, then an event is defined as being detected, and so the event detection module issues the event detection signal to the controller 12.

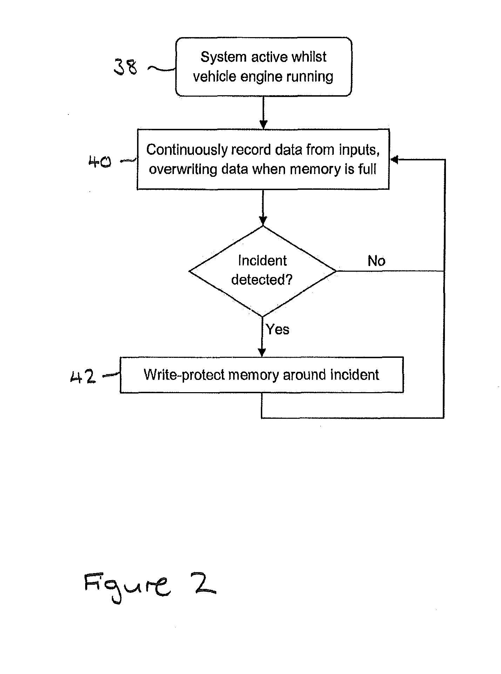

Referring to Figure 2, the operation of the event detection and recording system of Figure 1 whilst the vehicle engine is running 38, for example when the vehicle is being driven, will be described. In this mode of operation, the controller 12 is in a ready state in which it continuously records 40 event data by storing the event data to the memory 16. As the memory 16 is of finite capacity, the controller 12 is configured to overwrite the oldest event data with most recently generated event data.

Following receipt of an event detection signal from the event detection module, the controller 12 continues to record event data to the memory 16 and, furthermore, write-protects 42 a portion of memory so that it cannot be overwritten automatically. The portion of memory that is write-protected contains event data stored over a predetermined period during which the detected event occurred. Moreover, the portion of memory 16 that is write-protected contains event data that is stored before, during and after the occurrence of the detected event.

The length of the predetermined period may be controlled in response to the type of the detected event. For example, if the event is a collision, then the overall predetermined period may be longer than if the event is an object passing but not directly interacting with the vehicle.

Thus, when this write-protected data is later retrieved from the memory 16, it is possible for a user to see video footage and other event data in the lead-up to, during and following an event. To this end, the controller 12 is arranged to format the event data (including the video footage) and then transmit it to the electronic display screen 14 for viewing. It will be appreciated that this can be done for event data generated in real time, or from event data retrieved from the memory 16. Displaying event data in real time can advantageously allow other functions to be performed by the event detection and recording system. In particular, showing real-time video footage can allow the event detection and recording system to also perform the function of a parking assistance system.

In the present embodiment, the event detection and recording system comprises a user interface - in particular, the electronic display screen 14 having a touch-sensitive screen. In other embodiments, the user interface may take other forms -for example, buttons and/or dials.

The user interface is arranged to receive user commands for controlling the behaviour of the controller 12. On receipt of a particular user command, the controller 12 is arranged to carry out one of a number of different functions. For example, a user may use the user interface to carry functions such as:
- select a portion of the memory containing event data for playback on the electronic display screen 14;
- control video playback of event data stored in the memory 16 (e.g. play, pause, fast-forward, rewind, etc);
- select a different video image set to be displayed (e.g. an overhead virtual view of the vehicle, a rear view, a front view, a side view, or a combination of different views).
- choose which other event data parameters are to be displayed (e.g. speed of vehicle, GPS position, engine speed, gear, fuel level etc);
- change a write-protected state of a portion of the memory, allowing or preventing overwriting of that memory portion; and
- transmit event data from the memory 16 to a remote device - for example, a remote storage device such as a USB memory stick, or to an authorised smartphone.

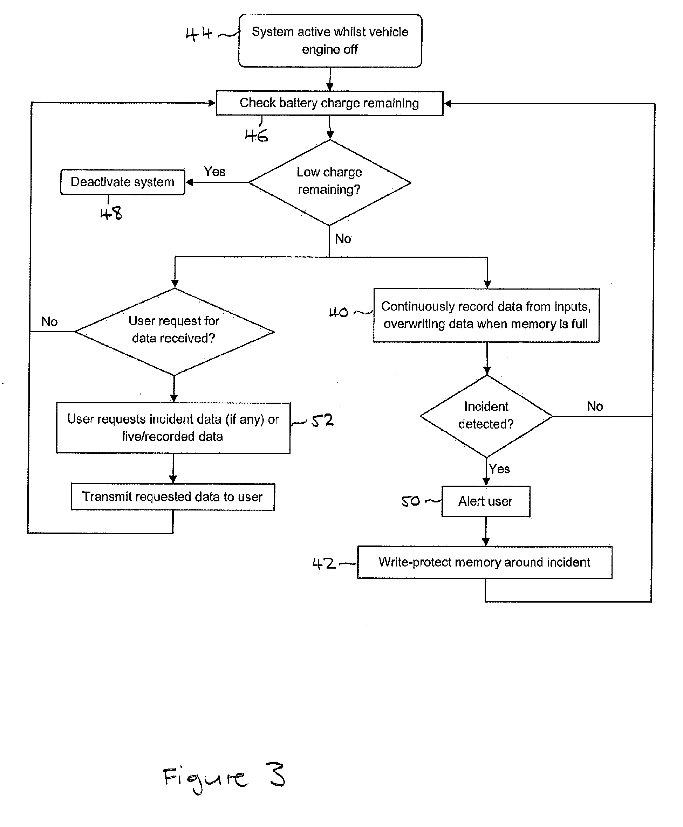

Figure 3 shows the operation of the event detection and recording system a different configuration of that shown in Figure 2. In this configuration, the vehicle engine is off 44 - for example when the vehicle has been left parked in a car park. However, the controller 12 maintains its ready state even though the engine is off.

In alternative configurations, the video event data recorder is switched to a stand-by state or deactivated state when the vehicle engine is off and can be manually switched to the ready state by the user, if desired, via the user interface, or in response to a command sent from a remote device controlled by the user via the communication system 18.

Whilst the engine is off, the vehicle battery provides power to the event detection and recording system 10. In order that the vehicle battery is not depleted to the extent that the engine cannot be started, the controller 12 is configured to check 46 the remaining amount of charge of the vehicle battery. To this end, the event detection and recording system further comprises a battery charge detector for use in determining the state of charge of the battery. If the vehicle battery charge is too low, then the event detection and recording system 10 is switched from the ready state to a low-power state or a deactivated state 48.

In alternative embodiments, a dedicated battery is provided for the event detection and recording system, with the benefit that the ability to start the vehicle would not be compromised by the use of the event detection and recording system.

If sufficient charge remains in the vehicle battery, then the controller 12 of the event detection and recording system is maintained or switched to the ready state in which it continuously records 40 event data to the memory 16. If an event is detected, the user is alerted 50 to the occurrence of the incident via the communication system 18 which would transmit a message to the user such as an email or SMS message. Such a message may identify the type of detected event, and when it occurred. As with the configuration shown in Figure 3, the controller 12 will continue to record event data to the memory 16 following the detected event. Furthermore, the controller 12 will write-protect a portion of memory 16 so that it cannot be overwritten automatically, the portion of memory 16 containing event data recorded a predetermined period before, during and after the event. As further events could occur before the user is able to return to the vehicle, the event detection and recording system continues to record data (without overwriting the data of any incidents that have occurred) as long as there is sufficient charge in the vehicle battery.

As mentioned, the user may remotely access the event data handled by the event detection and recording system via the communications system. For example, the user may desire remote access if they have been alerted to the occurrence of an incident. The user sends a request 52 to access the desired recorded or live data and this is transmitted to them. This allows the user to view the images generated by the plurality of video cameras 24 as well as other information from the recordable inputs. Remote access to the event data handled by the event detection and recording system is via a web-based user interface. In alternative embodiments, smartphones, ideally with dedicated smartphone applications are used as terminals for remote access.

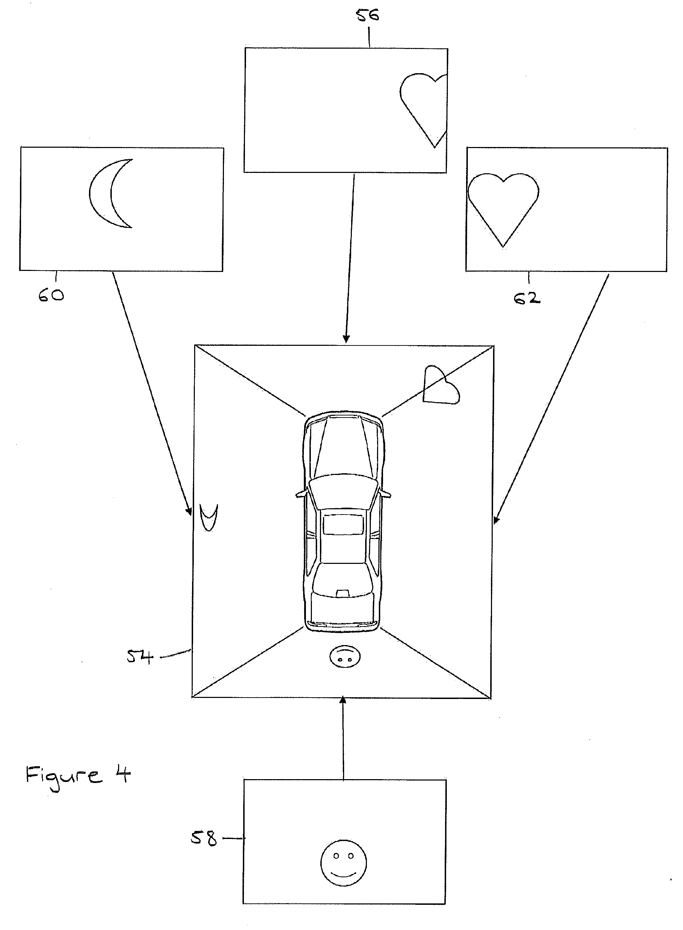

Figure 4 is a schematic diagram showing how a simulated overhead view 54 of the vehicle is generated by the event detection and recording system of Figure 1. The simulated overhead view 54 of the vehicle is a virtual image of a vehicle and the peripheral area around the vehicle as viewed from a virtual viewpoint located above the vehicle. The overhead view is generated by the controller 12 via a composite image generation process from video images contemporaneously generated from the plurality of cameras 24. In this example, four images from the four respective cameras 24 on different sides (front 56, rear 58, left 60 and right 62) of the vehicle are used by the controller 12 to generate the simulated overhead view.

The four cameras 24 use ultra-wide angle lenses such that there are overlaps in the fields of view of the cameras 24. The unmodified images (56, 58, 60, 62) from the plurality of cameras 24 are recorded to the memory 16, along with other information from the recordable inputs. If the user requests the simulated overhead view to be shown on the display or through remote access via the communications system, the images are then processed by the controller 12 to form a composite image in the form of the simulated overhead view 54.

The composite image generation process involves combining the video images together in a way that forms the composite image 54 of the peripheral area around the vehicle. The composite image generation process comprises an image registration process in which the video images that are combined to form the composite image are first manipulated by a predetermined coordinate transformation so that when they are combined, they align in a manner that maintains the visual continuity of the peripheral area.

In other words, the controller 12 uses a predetermined coordinate transform to join the images to produce a virtual overhead view of the vehicle. In one configuration the controller 12 performs the coordinate transformation with a road surface as a reference plane. This means that the coordinate transformation is made so that a two-dimensional object lying on the surface of the road, such as road markings, will have its continuity maintained across the transformed images. However, in other configurations, the controller 12 is able to utilise a different reference plane to maintain the continuity of different objects within the peripheral area surrounding the vehicle.

Techniques to manipulate several individual images to form a composite image are well known in the art and are discussed, for example, in the Applicants corresponding European patent application number 05023172.9 which concerns the generation of an overhead view image for use in a driving support system. The disclosure of this prior application is incorporated by reference herein to the extent permitted by applicable law.

The comprehensive view around the vehicle and the simulated overhead view of the vehicle and its surroundings are beneficial in determining external factors leading up to an event and make viewing the images from the plurality of cameras 24 more intuitive.

Many modifications may be made to the above examples without departing from the scope of the present invention as defined in the accompanying claims.

For example, the images generated by the plurality of video cameras 24 may be used to trigger the detection of an event. The images from the plurality of cameras 24 may be used by the controller 12 and/or the event detection module to detect motion or the appearance of an object within the peripheral area by registering changes in the pixel values of the images. For example, an event detection signal may be generated when a predetermined percentage of the total images pixels change at the same time. This would be beneficial when the vehicle is stationary, and if the vehicle is not directly affected by the event, for example if the event is merely an object passing the vehicle, but not colliding or directly interacting with it.

## Claims

1. An event detection and recording system (10) for a vehicle comprising:
a plurality of video cameras (24), each video camera generating a respective set of video images;
a memory (16) arranged to store each set of video images;
an event detection module arranged to detect the occurrence of an event concerning the vehicle, and in response, issue an event detection signal; and
a controller (12), operatively connected to the plurality of video cameras (24), the memory (16) and the event detection module;
the controller (12) having a ready state in which it is configured to:
continuously receive event data, the event data comprising each set of video images from the video cameras, and that store that event data to the memory, overwriting the oldest event data when the memory is full; and
receive the event detection signal from the event detection module and, in response, write-protect portions of the memory containing event data stored over a predetermined period during which the detected event occurred;
wherein:
the plurality of video cameras (24) are each positioned and arranged relative to one another to simultaneously view and generate video images of respective portions of a peripheral area substantially surrounding the vehicle.

2. The system of claim 1, wherein the video cameras (24) have overlapping fields of view.

3. The system of claim 1 or claim 2, wherein the peripheral area completely surrounds the vehicle.

4. The system of any preceding claim, wherein the controller (12) is arranged to carry out a composite image generation process in which video images of respective portions of the peripheral area contemporaneously generated by respective video cameras (24) are combined to form a composite image (54) of the peripheral area.

5. The system of claim 4, wherein the composite image (54) is a virtual image of the peripheral area around the vehicle as viewed from a virtual viewpoint located above the vehicle.

6. The system of claim 4 or claim 5, wherein the composite image generation process comprises an image registration process in which the video images that are combined to form the composite image (54) are first manipulated by a predetermined coordinate transformation.

7. The system of claim 6, wherein the predetermined coordinate transformation manipulates the video images so that when they are combined to form the composite image (54), they align in a manner that maintains the visual continuity of the peripheral area.

8. The system of any preceding claim, wherein the video cameras (24) are mounted at predetermined positions on the vehicle.

9. The system of any preceding claim, comprising at least four video cameras mounted, respectively at the front, the back and both sides of the vehicle.

10. The system of any preceding claim, wherein the event detection module is operatively connected to an anti-theft system and is arranged to issue the event detection signal in response to receiving from the anti-theft system a theft alert signal.

11. The system of any preceding claim, wherein the event detection module is operatively connected to a collision detection system (10) and is arranged to issue the event detection signal in response to receiving from the collision detection system a collision alert signal.

12. The system of any preceding claim, wherein the event detection module is operatively connected to at least one event data source and is arranged to issue the event detection signal in response to receiving from the at least one event data source event data having one or more predetermined values.

13. The system of any preceding claim, wherein the controller is operatively connected to at least one event data source from which the controller is arranged to receive event data to be stored to the memory (16).

14. The system of claim 13, wherein the event data source comprises at least one of:
an engine management system of the vehicle and an on-vehicle data bus.

15. The system of any preceding claim, wherein the event data that is recorded to the memory alongside the video image sets further comprises at least one of: longitude, latitude, vehicle speed, route, direction, road speed limit, traffic information, engine speed, engine temperature, proximity to one or more obstacles, selected gear, door position and steering angle.

16. The system of any preceding claim, wherein the length of the predetermined period is controlled in response to the type of detected event.

17. The system of any preceding claim, further comprising a communications system operatively connected to the controller, the communication system being arranged to communicate with a remote device.

18. The system of claim 17, wherein the controller (12) and the communication system are together arranged to transmit an alert to the remote device in response to the issuance of the event detection signal from the event detection module.

19. The system of claim 17 or claim 18, wherein the controller (12) and the communication device are together arranged to receive a data request from the remote device and, in response, transmit real-time event data and/or event data stored in the memory to the remote device.

20. A vehicle comprising the system of any preceding claim.

21. A method of detecting and recording events concerning a vehicle comprising the steps of:
continuously storing event data to a memory (16);
overwriting the oldest event data when the memory is full;
detecting the occurrence of an event concerning the vehicle; and
write-protecting portions of the memory (16) containing event data stored over a predetermined period during which the detected event occurred;
wherein:
the event data comprises a plurality of video image sets generated by a respective plurality of video cameras (24), the plurality of video cameras each being positioned and arranged relative to one another to simultaneously view and generate said video images which are of respective portions of a peripheral area substantially surrounding the vehicle.
